# EUROPEAN PATENT SPECIFICATION

(11) **EP 3 046 096 B1**
(45) Date of publication and mention of the grant of the patent: **30.03.2022**
(21) Application number: 15464002.3
(22) Date of filing: 15.01.2015
(51) Int. Cl.: G09C 1/00, H04L 9/32

(54) **A protection method of writting encrypted data to a memory device and reading decrypted data from the memory device using the power up of a PUF**
Verfahren zum Schreiben von verschlüsselten Daten in eine Speichervorrichtung und zum Lesen von entschlüsselten Daten aus einer Speichervorrichtung unter Verwendung der Einschaltung eines PUF
Procédé permettant d'écrire des données chiffrées dans un dispositif de mémoire et lecture de données déchiffrées à partir dudit dispositif utilisant la mise en fonction d'une PUF

(43) Date of publication of application: 20.07.2016
(73) Proprietor: Siemens Aktiengesellschaft, 80333 München (DE)
(72) Inventor: Pitu, Ciprian-Leonard, 500371 Brasov (RO)
(74) Representative: Maier, Daniel Oliver

(56) References cited:
- WO-A1-2014/053286
- WO-A2-2009/024913
- US-A1- 2009 327 709
- SANDEEP BHATKAR ET AL: "Address Obfuscation: an Efficient Approach to Combat a Broad Range of Memory Error Exploits", USENIX,, 29 July 2003 (2003-07-29), pages 1-17, XP061011038, [retrieved on 2003-07-29]

## Description

The invention relates to a method of writing data to a memory device and reading data from the memory device. The invention also relates to a system on chip for implementing the method.

An interaction of a system on chip (SoC) with an external memory device generally constitutes threats. In order to avoid security attacks like sniffing the memories need to be protected.

A common solution is cryptography. But in some circumstances this approach is not the right choice. An alternative solution is address obfuscation. US-2009/0327709-A1 discloses this method which is simple to apply but leaves the actual data unprotected. If the instruction set is known and a memory dump can be executed the memory can be de-obfuscated easily and therefore the original memory content is reconstructed.

WO 2014/053286 A1 discloses a system and a method for generating a cryptographic key from a memory used as physically unclonable function (PUF). Said memory is configured such that each powering-up of the memory the memory settles into a memory content which depends upon at least partially random physical characteristic. The cryptographic key derives from the memory content into which the memory settled.

WO 2009/024913 A2 discloses a method for identification of devices using physical unclonable functions, wherein the response of the physical unclonable function is uniquely representative for the identity of the respective device.

Furthermore, Sandeep, Bhatkar et al: "Address Obfuscation: an Efficient Approach to Combat a Broad Range of Memory Error Exploits" 12th USENIX Security Symposium, USENIX Association, July 2003, pages 1-17. discloses a method of address obfuscation to randomize the absolute locations of all code and data and to also randomize the relative distances between different data items.

It is an object of the invention to provide an improved method for protecting external memory content.

In order to mitigate attacks like sniffing, the proposed method uses a delinearization approach for an address bus and a masking approach for the data. Thus, address delinearization and data masking are used together to obfuscate the memory content.

By means of a Physical Unclonable Function (PUF) a unique response is challenged. With this unique response the delinarization of the addresses and the masking or de-masking of data is performed.

The method also comprises an step of generating a reset signal in case of data falsification in order to reset a processor which interacts with the memory device. Thus, a reset occurs immediately, if a device with this implemented method is corrupted.

Further on it is advantageous, if the data is masked with the error corrected PUF response using the XOR operator and if the data is revealed out of masked data with the error corrected PUF response using the XOR operator. Such a data transformation is fast and needs little computing power.

In an advantageous embodiment of the method the check-sum verification is performed by using a cyclic error-correcting code. Error-correcting codes provide the ability to identify and to locate any error, whereas a cyclic code is an especially useful kind of error-correcting code.

An advantageous method utilizes a PUF device with silicon physical unclonable functions of a system on chip which comprises a processor and a memory controller. Thus the achieved memory obfuscation relies on the PUF device which exploits unique physical characteristics of a silicone device.

Each silicon device is uniquely characterized yielding in same unique memory patterns, making reverse engineering attacks, based on memory dumps, practically impossible.

As no enrolment phase is needed, the silicon device can be directly shipped to a customer. The solution can even be applied to a bootloader. Changes to the bootloader would be detected, if the bootloader is stored in the ROM memory via the memory controller and thus the memory obfuscation module.

The invention provides a method of writing data to a memory device and reading data from the memory device, comprising:
- issuing a challenge to a PUF device during a power-up process in order to derive a PUF response;
- error correcting the PUF response;
- providing, delinearized addresses of code and data segments, by means of a delinearization algorithm using the error corrected PUF response, to the memory device, wherein the delinearized addresses are used to write the data to during a write operation and the same addresses are selected during a read operation for reading data;
- masking data, which is written to the memory device, by means of a masking module using the error corrected PUF response during write operation wherein the data is masked with the error corrected PUF response using the XOR operation; and
- de-masking data, which is read from the memory device, by means of the masking module using the error corrected PUF response during read operation wherein the data is revealed out of the masked data with the error corrected PUF response using the XOR operation; and
- performing a check-sum verification of the read data;
- and generating a reset signal in case of data falsification in order to reset a processor which interacts with memory device.

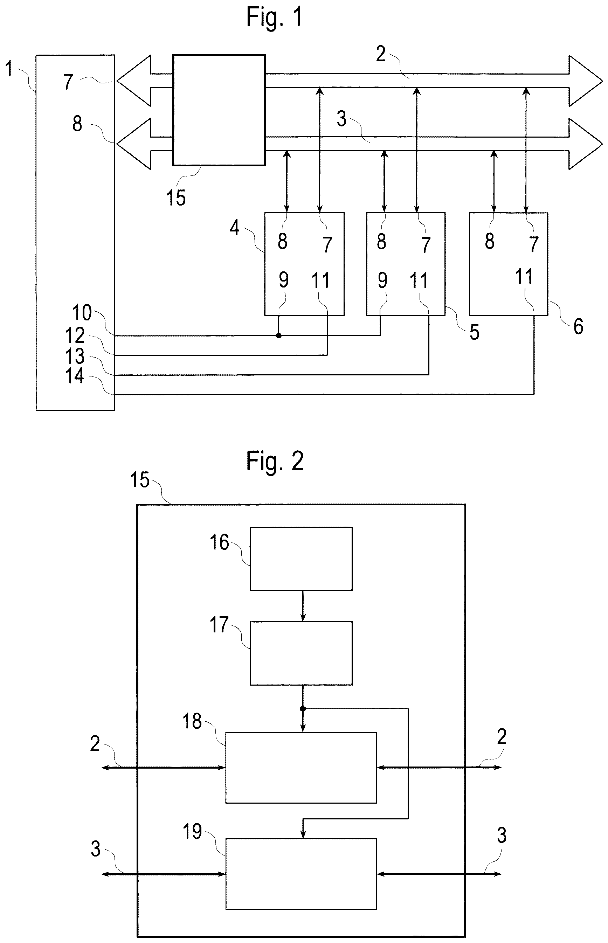

The obfuscation module 15 is shown in Fig. 2 in detail. It comprises a PUF device 16 which responses to a challenge with a unique output by utilizing a silicon physical unclonable function.

The PUF device 16 utilizes the fact that no integrated circuit (IC) is similar to another because of production process variations. For example, path delays vary enough across ICs to use them for identification. Therefore PUF provides a direct link between the physical properties of the silicon device and the security level provided.

The output of the PUF device 16 is inputted to an error correction module 17 in order to make the PUF response consistent.

The error corrected PUF response is used in the obfuscation structure as such, namely in an address delinearization module 18 and in a data masking module 19.

The address delinearization module 18 is connected to the address bus 2 and delinearizes the exchanged addresses. The data masking module 19 is connected to the data bus 3 and masks or de-masks the exchanged data.

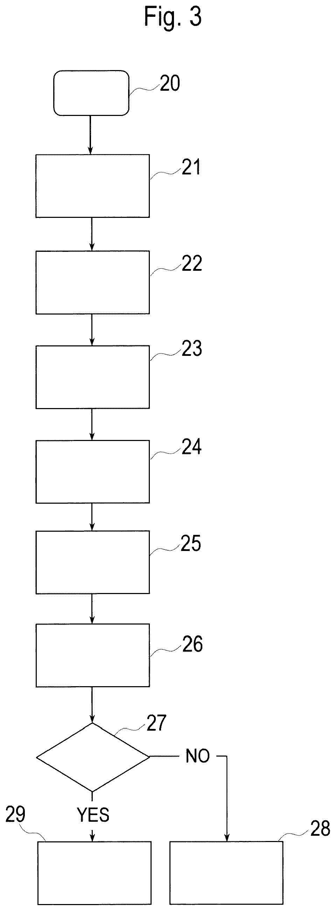

The different method steps are described with reference to the block diagram in Fig. 3.

During power-up 20 the PUF device 16 is challenged 21. As a result the PUF response is derived 22. In a next step 23 the PUF response is error corrected. Then, the error corrected PUF response is passed to the address delinearization (address obfuscation) 24 and data masking or de-masking 25.

Address delinearization 24 and masking or de-masking 25 are implemented with any known mathematically proven theory in order to realize the needed functionality. Address delinearization 24 randomizes the addresses of code and data segments. For this purpose the error corrected PUF response is considered as random response.

During the write operation the addresses are delinearized and the data to be written is masked with the error corrected PUF response. During the read operation the same addresses are selected as before but the data is de-masked, thus revealing the original data.

In order to check the validity of the read data check-sum verification 26 is performed. For this purpose the so called cyclic error-correcting code (CRC) is preferred.

If the silicon device is subject to any physical attacks the PUF response changes yielding wrong addresses and wrong data during the de-masking operation. In this case the validity decision 27 of the check-sum is NO.

There are different possibilities for a reaction 28. The simplest way is to issue an alarm. A more sophisticated approach is to reset a processor (CPU) of the SoC, whereas any attack is blocked immediately.

If the check-sum verification 26 results in a YES-decision, an execution 29 of the loaded code is performed.

## Claims

1. A method of writing data to a memory device (4, 5, 6) and reading data from the memory device (4, 5, 6), comprising:
issuing a challenge to a PUF device (16) during a power-up process in order to derive a PUF response;
error correcting the PUF response;
providing delinearized addresses of code and data segments, by means of a delinearization algorithm using the error corrected PUF response, to the memory device (4, 5, 6), wherein the delinearized addresses are used to write the data to during a write operation and the same addresses are selected during a read operation for reading the data; and
masking data to be written to the memory device (4, 5, 6), by means of a masking module (19) using the error corrected PUF response, during write operation wherein the data is masked with the error corrected PUF response using the XOR operator and de-masking data to be read from the memory device (4, 5, 6), by means of the masking module (19) using the error corrected PUF response, during read operation and performing a check-sum verification of the read data wherein the data is revealed out of masked data with the error corrected PUF response using the XOR operator;
and generating a reset signal in case of data falsification in order to reset a processor which interacts with the memory device (4, 5, 6).

2. The method of claim 1, wherein the check-sum verification is performed by using a cyclic error-correcting code.

3. The method of any one of claims 1 to 2, in which the PUF device (16) utilizes silicon physical unclonable functions of a system on chip which comprises a processor and a memory controller (1).

4. A system on chip comprising: a processor, a memory controller (1) and a memory obfuscation module (15) which is connected to a data bus (3) to an address bus (2), wherein the memory obfuscation module (15) at least comprises:
- a PUF device (16);
- an error correction module (17) connected to the PUF device;
- an address delinearization module (18) for delinearizing addresses of data by means of a delinearization algorithm using an error corrected PUF response, wherein the data are written to the delinearized addresses during a write operation and the data are read from the same addresses during a read operation; and
- a masking module (19) for masking data using the error corrected PUF response during write operations and for de-masking data using the error corrected PUF response during read operations, wherein the data is masked with the error corrected PUF response using the XOR operator and wherein the data is revealed out of masked data with the error corrected PUF response using the XOR operator;
and wherein the system furthermore comprises means to generate a reset signal in case of data falsification in order to reset the processor which interacts with the memory device (1).

## Patentansprüche

1. Verfahren zum Schreiben von Daten in eine Speichervorrichtung (4, 5, 6) und Lesen von Daten aus einer Speichervorrichtung (4, 5, 6), das Folgendes umfasst:
Ausgeben einer Challenge an eine PUF-Vorrichtung (16) während eines Einschaltvorgangs, um eine PUF-Response abzuleiten,
Fehlerkorrigieren der PUF-Response,
Bereitstellen delinearisierter Adressen von Code- und Datensegmenten mittels eines Delinearisierungsalgorithmus, der eine fehlerkorrigierte PUF-Response verwendet, an die Speichervorrichtung (4, 5, 6), wobei die delinearisierten Adressen verwendet werden, um die Daten während einer Schreiboperation darin zu schreiben, und die gleichen Adressen während einer Leseoperation zum Lesen der Daten ausgewählt werden, und Maskieren in die Speichervorrichtung (4, 5, 6) zu schreibender Daten mittels eines Maskierungsmoduls (19) unter Verwendung der fehlerkorrigierten PUF-Response während einer Schreiboperation, wobei die Daten mit der fehlerkorrigierten PUF-Response unter Verwendung eines XOR-Operators maskiert werden, und Demaskieren aus der Speichervorrichtung (4, 5, 6) zu lesenden Daten mittels des Maskierungsmoduls (19) unter Verwendung der fehlerkorrigierten PUF-Response während einer Leseoperation und Durchführen einer Prüfsummenüberprüfung der gelesenen Daten, wobei die Daten mit der fehlerkorrigierten PUF-Reaktion unter Verwendung des XOR-Operators aus den maskierten Daten enthüllt werden,
und Erzeugen eines Rücksetzsignals im Fall von Datenverfälschung, um einen Prozessor, der mit der Speichervorrichtung (4, 5, 6) interagiert, zurückzusetzen.

2. Verfahren nach Anspruch 1, wobei die Prüfsummenüberprüfung unter Verwendung eines zyklischen, fehlerkorrigierenden Codes durchgeführt wird.

3. Verfahren nach einem der Ansprüche 1 und 2, wobei die PUF-Vorrichtung (16) in Silizium implementierte, physikalische nicht klonbare Funktionen eines Systems auf einem Chip nutzt, das einen Prozessor und eine Speichersteuerung (1) umfasst.

4. System auf einem Chip, das Folgendes umfasst: einen Prozessor, eine Speichersteuerung (1) und ein Speicherobfuskationsmodul (15), das mit einem Datenbus (3) mit einem Adressbus (2) verbunden ist, wobei das Speicherobfuskationsmodul (25) mindestens Folgendes umfasst:
- eine PUF-Vorrichtung (16),
- ein Fehlerkorrekturmodul (17), das mit der PUF-Vorrichtung verbunden ist,
- ein Adressdelinerarisierungsmodul (18) zum Delinearisieren der Adressen von Daten mittels eines Delinearisierungsalgorithmus, der eine fehlerkorrigierte PUF-Response verwendet, wobei die Daten während einer Schreiboperation in die delinearisierten Adressen geschrieben werden und die Daten während einer Leseoperation aus den gleichen Adressen gelesen werden, und
- ein Maskierungsmodul (19) zum Maskieren von Daten unter Verwendung der fehlerkorrigierten PUF-Response während Schreiboperationen und zum Demaskieren von Daten unter Verwendung der fehlerkorrigierten PUF-Response während Leseoperationen, wobei die Daten mit der fehlerkorrigierten PUF-Response unter Verwendung des XOR-Operators maskiert werden und wobei die Daten mit den fehlerkorrigierten PUF-Response unter Verwendung des XOR-Operators aus den maskierten Daten enthüllt werden,
und wobei das System ferner Mittel zum Erzeugen eines Rücksetzsignals im Fall von Datenverfälschung umfasst, um den Prozessor, der mit der Speichervorrichtung (1) interagiert, zurückzusetzen.

## Revendications

1. Procédé d'écriture de données sur un dispositif mémoire (4, 5, 6) et de lecture de données du dispositif mémoire (4, 5, 6), comprenant :
l'émission d'un défi à un dispositif à PUF (16) lors d'un processus de mise sous tension afin de trouver une réponse PUF ;
la correction d'erreur de la réponse PUF ;
la fourniture d'adresses délinéarisées de segments de code et de données, au moyen d'un algorithme de délinéarisation en utilisant la réponse PUF à erreur corrigée, au dispositif mémoire (4, 5, 6), dans lequel les adresses délinéarisées sont utilisées pour écrire les données lors d'une opération d'écriture et les mêmes adresses étant sélectionnées lors d'une opération de lecture pour lire les données ; et
le masquage de données à écrire au dispositif mémoire (4, 5, 6), au moyen d'un module de masquage (19) en utilisant la réponse PUF à erreur corrigée, lors d'une opération d'écriture dans lequel les données sont masquées par la réponse PUF à erreur corrigée en utilisant l'opérateur XOR et le démasquage de données à lire du dispositif mémoire (4, 5, 6), au moyen du module de masquage (19) en utilisant la réponse PUF à erreur corrigée, lors d'une opération de lecture et la réalisation d'une vérification de somme de contrôle des données de lecture dans lequel les données sont révélées à partir de données masquées par la réponse PUF à erreur corrigée en utilisant l'opérateur XOR ;
et la génération d'un signal de réinitialisation en cas de falsification de données afin de réinitialiser un processeur qui interagit avec le dispositif mémoire (4, 5, 6).

2. Procédé selon la revendication 1, dans lequel la vérification de somme de contrôle est réalisée en utilisant un code de correction d'erreur cyclique.

3. Procédé selon l'une quelconque des revendications 1 à 2, dans lequel le dispositif à PUF (16) utilise des fonctions physiques non clonables à silicium d'un système sur puce qui comprend un processeur et un contrôleur de mémoire (1).

4. Système sur puce comprenant : un processeur, un contrôleur de mémoire (1) et un module d'obfuscation de mémoire (15) qui est connecté à un bus de données (3) à un bus d'adresse (2), dans lequel le module d'obfuscation de mémoire (15) comprend au moins :
- un dispositif à PUF (16) ;
- un module de correction d'erreur (17) connecté au dispositif à PUF ;
- un module de délinéarisation d'adresse (18) pour délinéariser des adresses de données au moyen d'un algorithme de délinéarisation en utilisant une réponse PUF à erreur corrigée, dans lequel les données sont écrites aux adresses délinéarisées lors d'une opération d'écriture et les données sont lues à partir des mêmes adresses lors d'une opération de lecture ; et
- un module de masquage (19) pour le masquage de données en utilisant la réponse PUF à erreur corrigée lors d'opérations d'écriture et pour démasquer des données en utilisant la réponse PUF à erreur corrigée lors d'opérations de lecture, dans lequel les données sont masquées par la réponse PUF à erreur corrigée en utilisant l'opérateur XOR et dans lequel les données sont révélées à partir de données masquées par la réponse PUF à erreur corrigée en utilisant l'opérateur XOR ;
et dans lequel le système comprend en outre un moyen de générer un signal de réinitialisation en cas de falsification de données afin de réinitialiser le processeur qui interagit avec le dispositif mémoire (1).
